# NEUE EUROPÄISCHE PATENTSCHRIFT

(11) **EP 0 475 417 B2**
(45) Veröffentlichungstag und Bekanntmachung des Hinweises auf die Entscheidung über den Einspruch: **31.01.2001**
(45) Hinweis auf die Patenterteilung: 07.12.1994
(21) Anmeldenummer: 91115496.1
(22) Anmeldetag: 12.09.1991
(51) Int. Cl.: H02G 3/22

(54) **Anordnung von Führungselementen für elektrische Leitungen im Fassadenbereich von Gebäuden**
Conducting elements arrangement for electrical cables through building façades
Agencement d'éléments de conduite de câbles électriques dans les façades de bâtiments

(30) Priorität: 14.09.1990 DE 4029245
(43) Veröffentlichungstag der Anmeldung: 18.03.1992
(73) Patentinhaber: Josef Gartner & Co., D-89421 Gundelfingen (DE)
(72) Erfinder:
(74) Vertreter: Müller-Boré & Partner Patentanwälte

(56) Entgegenhaltungen:
- DE-A- 1 183 220
- DE-A- 1 590 331
- DE-A- 3 406 722
- DE-A- 3 527 211
- DE-A- 3 642 964
- DE-C- 2 850 779
- GB-A- 1 148 184
- US-A- 4 716 698

## Beschreibung

Die Erfindung betrifft eine Anordnung von Führungselementen für elektrische Leitungen im Fassadenbereich von Gebäuden, wie sie in den Ansprüchen 1, 3, 4, 6, 7 und 10 beschrieben ist.

Immer häufiger werden im Fassedenbereich von Gebäuden elektrische Vorrichtungen installiert. Bei den elektrischen Einrichtungen kann es sich um in oder an den Fassadenelementen, insbesondere den Paneelen, angeordnete Motoren, Sensoren, photovoltaische Elemente oder ähnlichem handeln. Diese elektrischen Einrichtungen bedingen elektrische Leitungen zum Betrieb oder zur Abnahme erzeugter elektrischer Energie bzw. zur Übertragung von Meß- oder Steuersignalen. Die Speisung der elektrischen Leitungen mit Energie oder die Abnahme der elektrischen Energie aus den elektrischen Leitungen bzw. die Übertragung von Meß- oder Steuersignalen erfolgt im Regelfall von der Raumseite der Gebäude. Die elektrischen Leitungen müssen demzufolge zwischen den Fassadenelementen und einem Zugriff auf der Raumseite verlegt werden bzw. angeordnet sein.

Eine solche Anordnung elektrischer Leitungen im Fassadenbereich von Gebäuden muß dabei verschiedensten Anforderungen genügen. Zunächst muß sichergestellt sein, daß die elektrischen Leitungen beim Aufbau der Fassade nicht beschädigt werden und vor allem den Fassadenaufbau nicht behindern. Die elektrischen Leitungen sollen ferner möglichst schnell von den elektrischen Einrichtungen bis zu einem Zugriff auf der Raumseite geführt werden. Zudem darf durch die Durchführung der elektrischen Leitungen die Dichtigkeit der Fassade nicht beeinträchtigt werden.

Aus der US-A-4 716 698 ist eine Anordnung von elektrischen Leitungen im oberen und seitlichen Abschlußbereich von Trennwänden bekannt. Dabei soll das Problem gelöst werden, daß Trennwände, deren Höhe geringer als die Raumhöhe ist, an beliebigen Stellen eines Raumes platziert werden können, ohne aufgrund der neuen Platzierung elektrische Leitungen im Bereich der Trennwände oder in den neu entstehenden Bereichen erneut anordnen zu müssen. Zur Lösung dieses Problemes wird eine spezielle Anordnung der elektrischen Leitungen in dafürvorgesehenen Kabelschächten in den vorgenannten Randbereichen der Trennwände vorgeschlagen.

Es ist Aufgabe der vorliegenden Erfindung, eine Anordnung und Ausgestaltung von Führungselementen für elektrische Leitungen im Fassadenbereich von Gebäuden vorzuschlagen, bei der die elektrischen Leitungen so geführt sind, daß die Anordnung der elektrischen Leitungen den Fassadanaufbau möglichst wenig behindert sowie ein Zugriff zu den elektrischen Leitungen von der Raumseite her erfolgen kann, wobei die elektrischen Leitungen - sowohl beim Fassadanaufbau als auch später-weitgehend sicher vor Beschädigung sind, und die Dichtigkeit der Fassade weiterhin gewährleistet ist.

Die Lösung der gestellten Aufgabe ergibt sich aus den in den Ansprüchen 1, 3, 4, 6, 7 und 10 angegebenen Merkmalen Vorteilhafte Weiterbildungen ergeben sich aus den Unteransprüchen.

Zweckmäßigerweise ist das Führungselement ein im Bereich der Fassadenkonstruktion vorhandenes Element, insbesondere ein Isolier- oder Dichtungselement der Fassade. Somit können in platz- und materialsparender Weise bereits vorhandene Elemente als Führungselemente für die elektrischen Leitungen dienen, Sollte dies aus bestimmten Gründen jedoch nicht möglich oder nicht praktikabel sein, kann das Führungselement zweckmäßigerweise ein im Bereich der Fassedenkonstruktion zusätzlich anzuordnendes Element sein.

Dabei ist das Führungselement ein Innendichtungsprofil, angeordnet zwischen dem Pfosten oder Riegel und dem, wobei die elektrische Leitung Fassadenelement im Inneren des Innendichtungsprofils angeordnet ist. Das Innendichtungsprofil kann als zwangsläufig vorhandenes Element einer Fassadenkonstruktion bereits bei der Herstellung eine Aufnahmeeinrichtung für die elektrische Leitung in Form einer in Längsrichtung des Innendichtungsprofils angeordneten Ausnehmung aufweisen. Die elektrische Leitung wird dabei direkt aus einem Fassadenelement über einen Durchgang in das Innendichtungsprofil geführt. Dabei ist es möglich, die Zu- bzw. Abgangsstellen der elektrischen Leitung aus dern Innendichtungsprofil von vorneherein festzulegen und die elektrische Leitung vor der Installation des Innendichtungsprofils einzuziehen. Beim Zusammenbau der Fassade muß die elektrische Leitung dann nur noch in vorhandene Ausnehmungen des Fassadenelements bzw. des Profils oder Riegels eingeführt werden.

Vorzugsweise ist das innendichtungsprofil ein insbesondere durch Verklebung zusammengesetztes Profil, wobei die elektrische Leitung vorzugsweise im Inneren des dem Fassadenelement zugewandten Teilprofils angeordnet ist. Dadurch ist es möglich, daß das Teilprofil andere Materialeigenschaften aufweisen kann als der restliche Teil des Innendichtungsprofils und vor der Montage an dem Fassadenelement angebracht werden kann. Auch hierbei wird die elektrische Leitung bereits vorher, vorzugsweise im Inneren des Teilprofils angeordnet sein.

Das Führungselement ist dabei ein Isolierelement, vorzugsweise ein Doppel-Isoliersteg sein, welches zwischen dem Pfosten oder Riegel und einem der Fassadenbefestigung dienenden Metallprofilteil als thermische Trennung angeordnet ist. Solche Isolierelemente sind in der Regel genügend von anderen Fassadenteilen beabstandet, so daß die Anordnung oder Aufnahme von elektrischen Leitungen ohne Platzprobleme möglich ist, wobei der Doppel-Isoliersteg im Bereich der freien Enden der einzelnen Isolierstege wenigstens zwei Verbindungsstege zum Verbinden der einzelnen Isolierstege aufweist, so daß der Querschnitt des Doppel-Isolierstegs eine Art freie Kammer aufweist, in welcher die elektrische Leitung angeordnet ist. Es ist dabei sehr einfach, den so ausgebildeten Doppel-Isoliersteg einstückig vorzusehen und die elektrische Leitung in dessen Innerem anzuordnen. Der Doppel-Isoliersteg stellt dabei ein besonders gut schützendes und isolierendes Element für die elektrische Leitung dar.

Auch kann das Isolierelement oder der einzelne Isoliersteg des Doppel-Isolierstegs eine in deren Längsachsenrichtung verlaufende, insbesondere isolierende Halterung aufweisen, vorzugsweise in Form einer hinterschnittenen Nut, in welcher die elektrische Leitung angeordnet wird. Durch die vorgesehene Halterung ist die elektrische Leitung sicher gehalten, wobei es auf einfache Weise möglich ist, das Isolierelement bzw. den Isoliersteg bereits bei der Herstellung mit der Halterung zu versehen.

Vorzugsweise ist die Halterung in dem Seitenbereich des Isolierelementes oder des Isolierstegs angeordnet, der dem Fassadenelement zugewandt ist, welches die elektrische Leitung aufweist. Somit ist es einerseits möglich, die elektrische Leitung auch noch nachträglich an dem Isolierelement oder dem Isoliersteg zu befestigen, wobei zwischen dem Austritt der elektrischen Leitung aus dem Fassadenelement und der Halterung der kürzest mögliche Abstand vorhanden ist. Die Halterung ist dabei vorzugsweise in der Querschnittsmitte des Isolierelements oder des Isolierstegs angeordnet, um die elektrische Leitung möglichst weit genug von anderen Teilen entfernt anzuordnen.

Zweckmäßigerweise ist zwischen der Halterung und der elektrischen Leitung eine zusätzliche Isoliereinrichtung vorgesehen, die die elektrische Leitung umgibt, so daß die elektrische Leitung im Inneren der zusätzlichen Isoliereinrichtung angeordnet ist. Das Vorsehen einer zusätzlichen Isoliereinrichtung schützt die elektrische Leitung zusätzlich vor Beschädigung und stellt sicher, daß eine Berührung der elektrischen Leitung mit Metallteilen der Fassade sicher verhindert wird.

Das Führungselement kann ein der Befestigung dienendes Metallprofil sein. Somit findet wiederum ein bereits vorhandenes Fassadenteil als Führungselement für die elektrischen Leitungen Verwendung, wobei im Querschnittsinneren des Metallprofils eine Ausnehmung vorgesehen ist, die mit einem isolierenden Material, insbesondere mit Kunststoff, ausgekleidet ist, in welcher die elektrische Leitung angeordnet ist. Die elektrische Leitung wird somit geschützt im Inneren des Metallprofils geführt, wobei durch die vorgesehene isolierende Auskleidung der Ausnehmung des Metallprofils eine Berührung möglicherweise blanker Kabelstellen mit dem Metallprofil vermieden wird.

Auch kann das Metallprofil wenigstens eine in dessen Längsachsenrichtung verlaufende Halterung sein, vorzugsweise in Form einer hinterschnittenen Nut, in welcher die elektrische Leitung angeordnet ist. Somit kann die elektrische Leitung auch noch nachträglich am Metallprofil angeordnet werden und ist insbesondere bezüglich des Metallprofils von außen zugänglich. Die Herstellung der Metallprofile mit einer Ausnehmung oder einer Halterung ist insbesondere dann einfach zu bewerkstelligen und somit nicht kostenintensiv, wenn es sich um ein Strangpreßprofil handelt.

Zweckmäßigerweise ist die Halterung in dem Seitenbereich des Metallprofils angeordnet, der dem Fassadenelement zugewandt ist, welches die elektrische Leitung aufweist. Die gewünschten kurzen, ungeschützten Wege der elektrischen Leitung zwischen geschützten Teilen ist somit gewährleistet.

Vorteilhafterweise ist dabei zwischen der Halterung und der elektrischen Leitung eine zusätzliche Isoliereinrichtung vorgesehen, die die elektrische Leitung umgibt, so daß die elektrische Leitung im Inneren der zusätzlichen Isoliereinrichtung angeordnet ist. Dadurch wird verhindert, daß die elektrische Leitung direkt am Metallprofil anliegt und auch von außen her zusätzlich gegen Beschädigung geschützt ist.

Das Führungselement kann auch aus wenigstens einer am Querschnitt des Pfostens oder Riegels über Isoliereinrichtungen, insbesondere Isolierstege, vorzugsweise aus Kunststoff, angeordneten elektrischen sich in Längsachsenrichtung des Profils erstreckenden Leitungseinrichtung. welche mit der elektrischen Leitung verbunden ist Das über den Kunststoffsteg angebundene metallische Profil stellt selbst den elektrischen Leiter dar, der gegenüber der restlichen Metallkonstruktion elektrisch isoliert ist. Der Pfosten oder der Riegel können vor der Montage bereits mit den elektrischen Leitungseinrichtungen, beispielsweise über Klemmvorrichtungen, verbunden werden. Mehrpolige elektrische Leitungen werden an mehreren Profilen polweise angeschlossen. Die elektrischen Leitungen können dementsprechend kürzer ausgeführtwerden und vor allem kann die elektrische Leitungseinrichtung über ihre Länge auch mehrere Anschlüsse von elektrischen Leitungen aufweisen. Eine direkte Verbindung der elektrischen Leitungseinrichtungen mit dem Pfosten oder Riegel wird dadurch vermieden, daß der Anschluß der elektrischen Leitungseinrichtungen über Isoliereinrichtungen erfolgt.

Zweckmäßigerweise besteht die elektrische Leitungseinrichtung aus einem Aluminiumprofil, welches vorzugsweise an den freien Enden der Isoliereinrichtungen angeordnet ist. Aluminiumprofile können günstig und schnell hergestellt werden und stellen ideale elektrische Leiter dar, deren Querschnitt je nach Bedarf variiert werden kann. Die elektrische Verbindung unterschiedlicher Pfosten und Riegel kann entweder über angeklemmte elektrische Leitungen oder über angeklemmte Aluminiumprofile erfolgen. Diese nehmen die durch unterschiedliche Dehnungen verursachten Bewegungen zwischen den Pfosten bzw. Riegeln auf.

Zweckmäßigerweise ist die Halterungseinrichtung oder die elektrische Leitungseinrichtung an einer der Raumseite zugewandten Querschnittsseite des Pfostens oder Riegels, vorzugsweise an der dem Paneel parallelen Querschnittsseite des Pfostens oder Riegels angeordnet. Dadurch ist es auf einfache Weise möglich, von der Raumseite zu den elektrischen Leitungen zu gelangen, die als elektrische Leitungseinrichtung weitergeführt sind. Zugleich bedingt diese bevorzugte Anordnung einen größeren Freiraum im Querschnitt des Pfostens oder Riegels, in welchen ein die Pfosten oder Riegel verbindendes Element eingebracht werden kann, ohne dabei die elektrischen Leitungen zu beschädigen oder durch diese im Einbau behindert zu sein.

Ein besonders vorteilhafter Zugriff von der Raumseite ist dann gewährleistet, wenn die elektrische Leitungseinrichtung, von der Raumseite her gesehen, mit wenigstens einer insbesondere entfernbaren Abdeckung, vorzugsweise eines auf den Pfosten oder den Riegel aufklipsbaren Deckels, abgedeckt ist.

Weiterhin ist es in vorteilhafter Weise vorgesehen, daß die elektrische Leitung eine lösbare Verbindung, insbesondere in Form einer aus einer Buchse und einem Stecker bestehenden Steckverbindung aufweist. Das jeweilige Element der Steckverbindung kann bei der Montage, beispielsweise zusammen mit dem Fassadenelement, an einer vorbestimmten Stelle angeordnet werden und behindert somit den Montagevorgang der Fassade nicht. Das entsprechende Gegenelement kann dabei gleichzeitig oder nachträglich angeordnet werden.

Zweckmäßigerweise ist die lösbare Verbindung im Falzraum der Fassadenkonstruktion, d.h. zwischen den Fassadenelementen, insbesondere den Paneelen, dem Pfosten oder Riegel und dem Abdeckelement, insbesondere einem Fassaden-Halteelement mit Dichteinrichtungen, angeordnet, da der Falzraum vor und auch nach der Montage der Fassade bzw. der Fassadenelemente eine gute Zugänglichkeit aufweist.

Die Erfindung soll anschließend in beispielhafter und schematischer Weise anhand der nachfolgenden Figuren noch näher erläutert werden. Es zeigen dabei:
- Fig. 1-6, 8 und 9: Querschnitte durch eine Fassade im Bereich des Pfostens mit im wesentlichen gleichen Aufbau und der Darstellung der verschiedenen Anordnung unterschiedlicher Führungselemente sowie der entsprechenden elektrischen Leitungen, und
- Fig. 7: einen Querschnitt durch den Pfosten im Bereich der Raumseite.

Der in den folgenden Darstellungen in beispielhafter Weise gewählte Bereich einer Fassade ist jeweils weitgehendst gleich ausgebildet, wobei die Anordnung und Ausgestaltung der gezeigten, unterschiedlichen Führungselemente auch in anderen Teilen der Fassade, insbesondere im Bereich eines Riegels der Fassade, vorgesehen sein können. Der teilweise unvermeidliche Durchtritt der elektrischen Leitungen 2 durch insbesondere Metallteile ist mit einer die elektrischen Leitungen 2 zusätzlich umgebenden Schutzeinrichtung, insbesondere in Form einer Gummihülle oder eines Kunststoffröhrchens zusätzlich geschützt, so daß eine in diesem Bereich eventuell schadhafte elektrische Leitung 2 nicht mit diesen Teilen in Kontakt kommen kann und daß die Leitung beim Durchführen nicht beschädigt wird.

Der Übergangsbereich der elektrischen Leitungen 2 von den als Paneelen 4 dargestellten Fassadenelementen zu den Führungselementen findet vorzugsweise im Stoßbereich der Fassadenelemente bzw. der Pfosten 8 oder Riegel statt.

Als Beispiel für die Notwendigkeit elektrischer Leitungen 2 aufgrund von elektrischen Einrichtungen wurden photovoltaische Elemente in den Zeichnungen gewählt (nicht dargestellt), wobei anstelle der photovoltaischen Elemente auch jegliche andere elektrische Einrichtung denkbar ist. Die gleichfalls in allen Figuren dargestellte Modulsicherung 56 sorgt bei photovoltaischen Elementen dafür, daß bei einem Ausfall eines photovoltaischen Elementes nicht das gesamte Modul ausfällt.

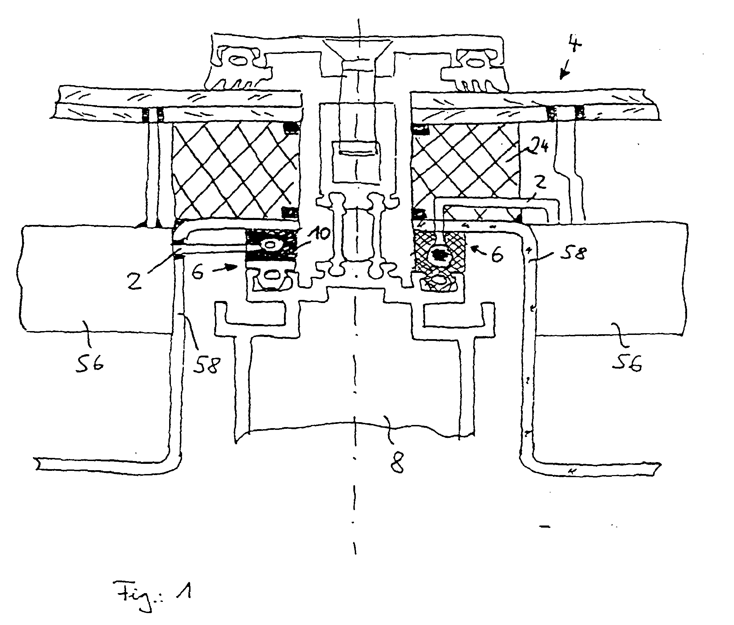

In Fig. 1 ist als Führungselement für die elektrische Leitung ein Innendichtungsprofil 6 auf der rechten Seite dargestellt, welches zwischen einem Pfosten 8 und einem Fassadenelement 4, 24, 58 angeordnet ist. Eine elektrische Leitung 2 wird dabei durch den Randumleimer bzw. Abstandhalter 24 und die Innenwandung 58 des Paneels 4 zu dem Innendichtungsprofil 6 geleitet. Die elektrische Leitung 2 ist im Inneren des Innendichtungsprofils 6 in einer Art Kanal angeordnet. Der Zugriff zu der Leitung 2 kann beispielsweise durch den Pfosten 8 oder am Pfosten 8 entlang, vorzugsweise im Decken- oder Bodenbereich eines jeden Stockwerks erfolgen.

Auf der linken Seite in Fig. 1 ist ein weiteres Dichtungsprofil 6 gezeigt, welches als zusammengesetztes Profil ausgebildet ist. Die elektrische Leitung 2 ist in alternativer Weise nicht durch den Abstandhalter 24 sondern direkt aus der Modulsicherung 56 durch die Innenwandung 58 des Paneels 4 zu dem Innendichtungsprofil 6 geführt. Die elektrische Leitung 2 befindet sich im Inneren des Teilprofils 10 des Innendichtungsprofils 6, welches der Innenwandung 58 zugewandt ist. Der Zugriff zu der elektrischen Leitung 2 kann dabei in der bereits geschilderten Weise erfolgen.

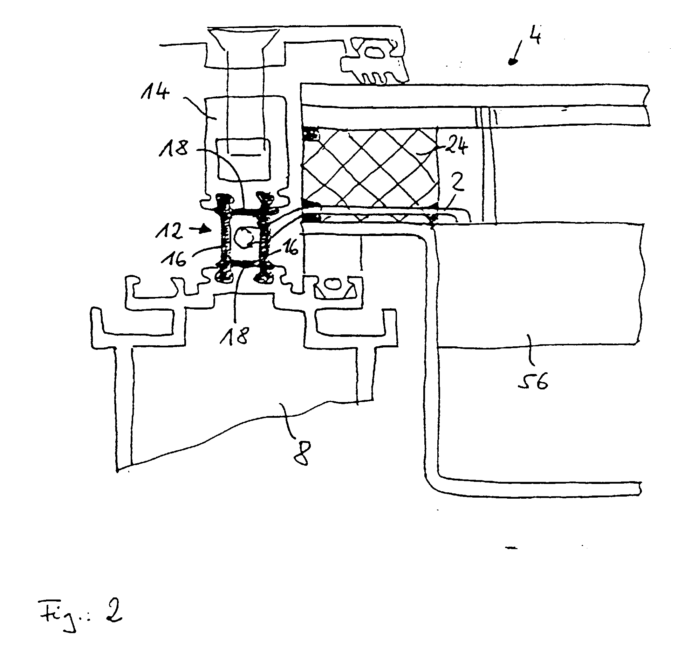

Fig. 2 zeigt als Führungselement für die elektrische Leitung 2 ein als Doppel-Isoliersteg 12 ausgebildetes Isolierelement. Der Doppel-Isoliersteg 12 besteht aus einzelnen Isolierstegen 16, die in ihrem Endbereich über Querverbindungsstege 18 miteinander verbunden sind, so daß sich im Inneren des Doppel-Isolierstegs 12 eine Art Kanal bildet. Der Doppel-Isoliersteg 12 ist zwischen dem Pfosten 8 und einem zur Fassadenbefestigung dienenden Metallprofilteil 14 angeordnet und verhindert in seiner eigentlichen Aufgabe einen Wärmeübergang zwischen der Wetterseite und der Rauminnenseite. Die Leitung 2 ist von der Modulsicherung 56 durch den Abstandhalter 24 geführt und anschließend auf kürzestem Weg zu dem Inneren des Doppel-Isolierstegs 12, in welchem die elektrische Leitung 2 sicher im Fassadenbereich geführt werden kann. Der Zugriff zu der elektrischen Leitung kann beispielsweise in der zu Fig. 1 beschriebenen Weise erfolgen.

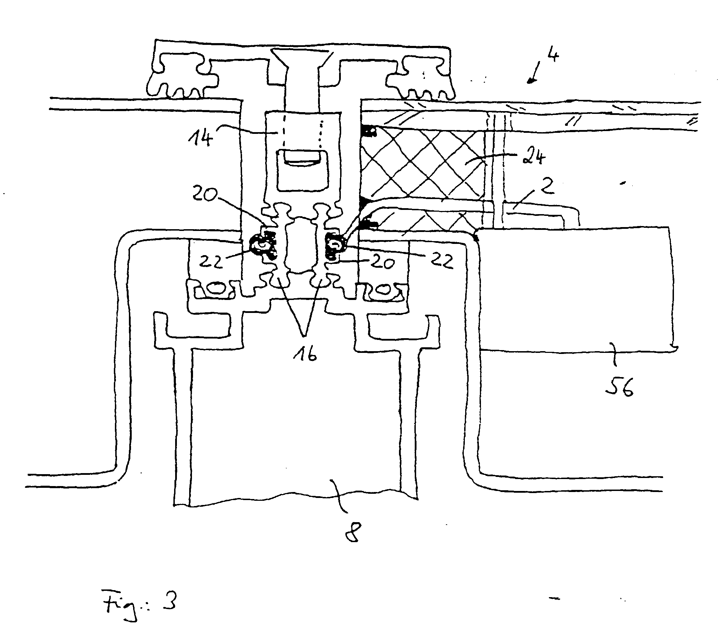

In Fig. 3 ist die elektrische Leitung 2 analog zu Fig. 2 auf kürzestem Weg zu dem zwischen Pfosten 8 und Metallprofil 14 angeordneten Isolierelement in Form zweier einzelner Isolierstege 16 geleitet. Die Isolierstege 16 weisen eine in Längsachsenrichtung angeordnete Halterung 20 auf, die an der dem nächstliegenden Fassadenelement zugewandten Seite des Isolierstegs 16 angeordnet ist. Die Halterung 20 weist dabei die Form einer hinterschnittenen Nut auf, in welcher die elektrische Leitung 2 gehalten und geführt ist.

Vorteilhafterweise ist im Bereich der Halterung 20, um die elektrische Leitung herum, eine zusätzliche Isoliereinrichtung 22 vorgesehen, über die die elektrische Leitung 2 in der Halterung 20 gehalten wird. Der Zugriff zu der elektrischen Leitung 2 von der Raumseite her erfolgt beispielsweise wiederum auf die zu Fig. 1 geschilderte Weise.

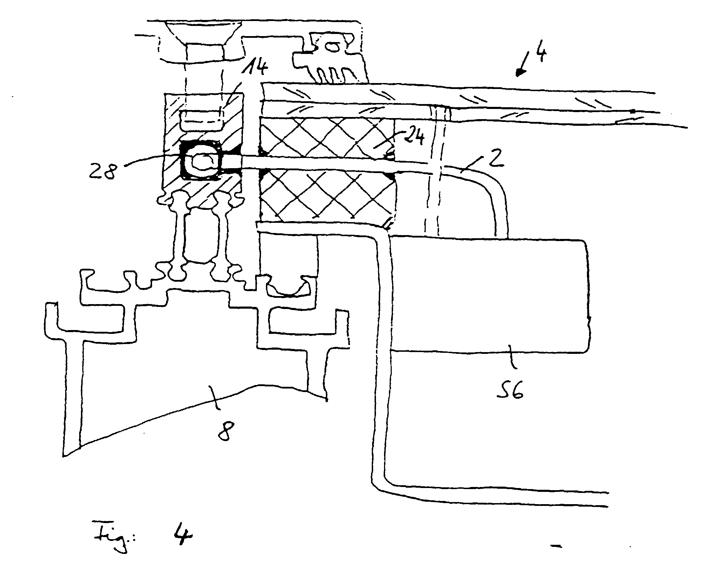

Eine weitere Variante eines Führungselementes zeigt Fig. 4, wobei die elektrische Leitung 2 durch den Abstandhalter 24 auf direktem Weg zum Metallprofil 14, genauer in dessen Querschnittsinneren geführt ist. Dazu weist das Querschnittsinnere des Metallprofils 14 einen in dessen Längsrichtung verlaufende Ausnehmung 28 auf. Damit eventuell beschädigte Stellen der elektrischen Leitung 2 nicht direkt mit dem Metallprofil 14 in Berührung kommen können, ist die Querschnittsausnehmung des Metallprofils 14 mit einem isolierenden Material ausgekleidet. Der Zugriff zu der elektrischen Leitung 2 von der Raumseite her kann auch in diesem Fall beispielsweise so erfolgen, wie es in Fig. 1 beschrieben ist.

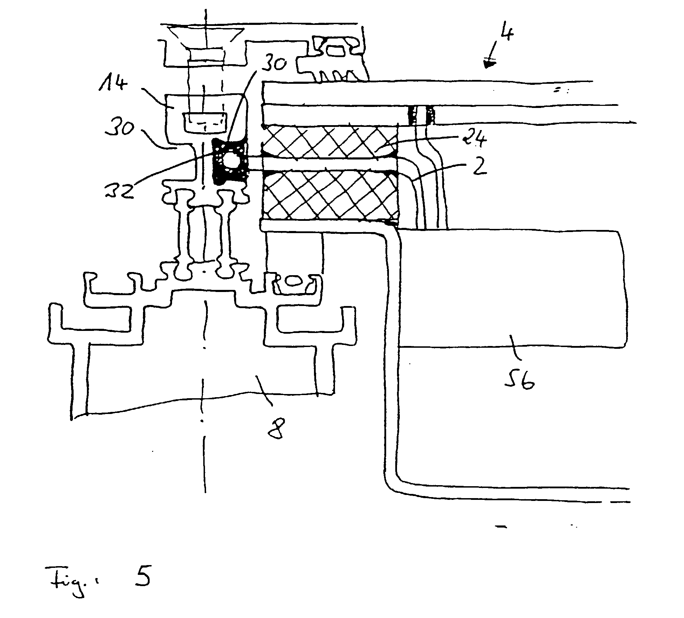

Eine weitere Variante, bei der das Metallprofil 14 als Führungselement für die elektrische Leitung 2 dient, ist in Fig. 5 gezeigt. Die elektrische Leitung 2 tritt aus dem Abstandhalter 24 aus und wird auf kürzestem Weg zu dem Metallprofil 14 geführt Das Metallprofil 14 weist zwei in dessen Längsachsenrichtung verlaufende Halterungen 30 auf, in dessen rechter Halterung 30 die elektrische Leitung 2 angeordnet ist. Die Halterungen 30 sind in den Seitenbereichen des Metallprofils 14 vorgesehen, die den entsprechenden Fassadenelementen 4 zugewandt sind, aus welchen die elektrischen Leitungen 2 austreten. Aus Si-cherheitsgründen und auch zum Schutz der elektrischen Leitung 2 ist zwischen der Halterung 30 und der elektrischen Leitung 2 eine zusätzliche Isoliereinrichtung 32 vorgesehen. Die Isoliereinrichtung 32 umgibt die elektrische Leitung 2 bzw. die elektrische Leitung 2 ist im Inneren der Isoliereinrichtung 32 geführt. Ein Zugriff zu der elektrischen Leitung 2 von der Raumseite her erfolgt beispielsweise wiederum in der zu den vorherigen Figuren bereits geschilderten Weise.

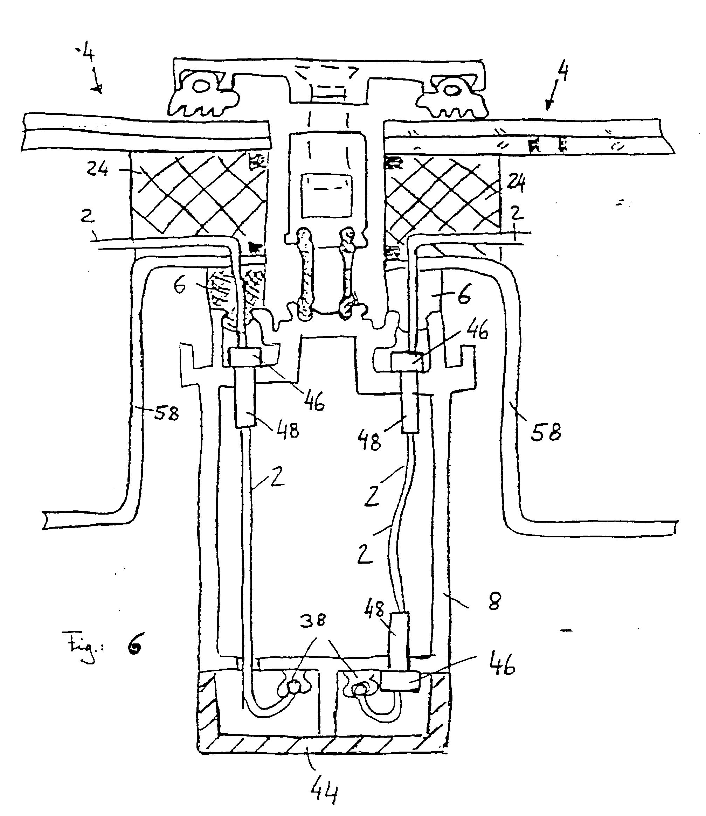

Fig. 6 zeigt an Durchtrittsstellen der elektrischen Leitung 2 durch den Pfosten 8 lösbare Verbindungen in Form von Steckverbindungen. Die Steckverbindungen bestehen dabei aus einer Buchse 46 und einem Stecker 48. Das Profil 8 kann vor der Montage bereits mit den Steckern 48 an den entsprechenden Stellen versehen sein, wobei die Stecker 48 fest mit dem Pfosten 8 verbunden sind. Beim Anschluß der Fassadenelemente 4 an den Pfosten 8 muß die Verbindung nur noch geschlossen werden, indem die mit den Buchsen 46 versehenen freien Enden der elektrischen Leitungen 2 der Fassadenelemente 4 mit den entsprechenden Steckern 48 verbunden werden. Wie dargestellt, kann auch an der raumseitigen Austrittsstelle der elektrischen Leitung 2 aus dem Pfosten 8 eine solche Steckverbindung angeordnet werden, wobei der Stecker 48 wiederum fest mit dem Pfosten 8 verbunden ist Die elektrische Leitung 2 wird anschließend wiederum an den Kabelklemmen 38 festgelegt.

An dieser Stelle soll noch einmal bemerkt werden, daß je nach den Erfordernissen, an dem Pfosten 8 entweder ein Stecker 48 oder eine Buchse 46 angeordnet wird.

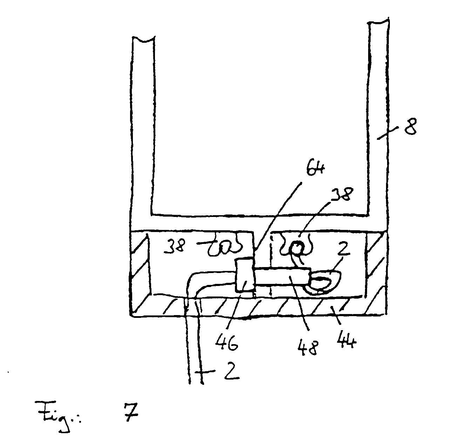

Fig. 7 zeigt den Pfosten 8 im Querschnitt lediglich im Bereich der Raumseite und soll zeigen, daß die Steckverbindung, bestehend aus der Buchse 46 und dem Stecker 48 auch an einem Mittelsteg 64 des Pfostens 8 angebracht sein kann. Der Stecker 48 ist fest an dem Mittelsteg 64 angeordnet, wobei dessen elektrische Leitung 2 in der Kabelklemme 38 festgelegt ist. Zugang zu der Steckverbindung von der Raumseite erfolgt über die elektrische Leitung 2, an derem freien Ende in entsprechender Weise die Buchse 46 als Teil der Steckverbindung angeordnet ist. Die elektrische Leitung 2 ist bei dieser Variante durch eine Ausnehmung des Deckels 44 geführt.

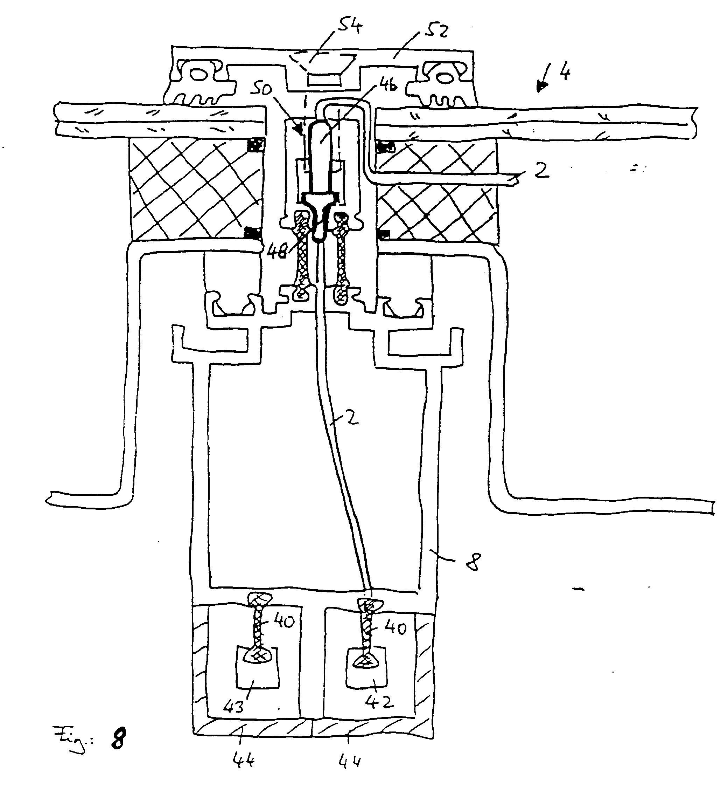

Schließlich zeigt Fig. 8, daß das Führungselement der elektrischen Leitung auch aus wenigstens einer am Querschnitt des Pfostens 8 über Isolierstege 40 angeordneten elektrischen Leitungseinrichtung in Form von Aluminiumprofilen 42, 43 bestehen kann. Die elektrische Leitung 2 wird auf beliebige Weise zu einem oder mehreren der Aluminiumprofile 42, 43 geführt und dort angeschlossen. Somit ist in Längsrichtung des Pfostens 8 keine isolierte elektrische Leitung 2 vorhanden, sondern ein ungeschützter elektrischer Leiter, hier in Form des Aluminiumprofils 42. Die Aluminiumprofile 42, 43 befinden sich vorzugsweise an der der Raumseite zugewandten, zur Ebene des Paneels 4 parallelen Querschnittsseite des Pfostens 8 und sind mit einem oder mehreren der beschriebenen Deckel 44 abgedeckt Die Aluminiumprofile 42, 43 sind am Pfosten 8 so angeordnet, daß sie einen genügend großen Abstand von den Querschnitteilen des Pfostens 8 aufweisen. Die Isolierstege 40 sorgen für eine sichere Halterung der Aluminiumprofile 42, 43 und verhindern einen elektrisch leitenden Kontakt mit dem Pfosten 8. Das in der Fig. 8 auf der linken Seite ohne Zuführung einer elektrischen Leitung dargestellte Aluminiumprofil 43 kann beispielsweise auch als Nulleiter bzw. Erdung dienen. In Fig. 8 ist weiterhin eine lösbare Verbindung für die elektrische Leitung 2 in Form einer Steckverbindung 50 gezeigt Die Steckverbindung 50 besteht aus einer Buchse 46 und einem Stecker 48. Ein besonderer Vorteil der gezeigten Steckverbindung 50 besteht darin, daß das Fassadenelement 4 bei seiner Herstellung bereits an einer vorbestimmten Stelle die Buchse 46 aufweisen kann. Beim Aufbau der Fassade kann der Stecker 48 an einer vorbestimmten Stelle plaziert werden und es müssen lediglich die Buchse 46 und der Stecker 48 an der vorbestimmten Stelle zusammengesteckt werden, um eine durchgehende elektrische Leitung 2 zu erhalten.

Eine bevorzugte Stelle für die Anordnung der Steckverbindung 50 ist der Falzraum der Fassadenkonstruktion zwischen den Fassadenelementen 4, dem Pfosten 8 und dem Fassadenhalteelement 52 im Bereich der Verschraubung 54. Da die Verschraubung 54 in vertikaler Richtung des Gebäudes gesehen nicht durchgehend, sondern in Form einzelner, beabstandeter Halteelemente, beispielsweise Schrauben vorhanden ist, verbleibt zwischen den einzelnen Halteelementen genügend Raum für die Anordnung der Steckverbindung 50. Je nachdem, ob die aus dem Fassadenelement 4 kommende elektrische Leitung 2 stromführend ist oder nicht, muß entweder eine Buchse 46 oder ein Stecker 48 am Ende der aus dem Fassendenelement 4 kommenden elektrischen Leitung 2 angeordnet werden.

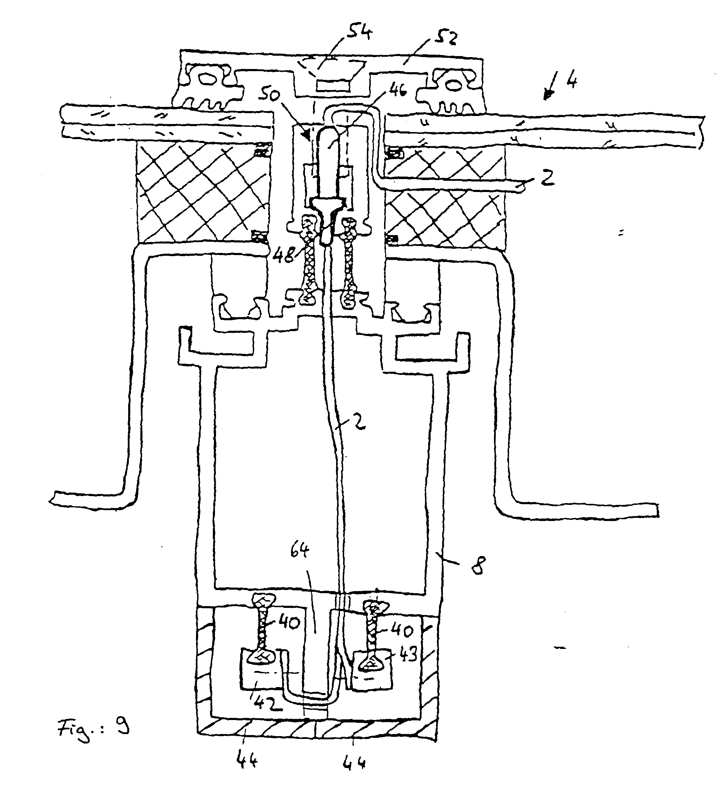

Fig. 9 zeigt im Unterschied zu Fig. 8 den Anschluß einer mehrpoligen elektrischen Leitung 2 an die Aluminiumprofile 42, 43. Das Aluminiumprofil 42 dient dabei als stromführender Leiter, an welchen der positive Pol der elektrischen Leitung 2 angeschlossen wird. Dazu wird der stromführende Teil der elektrischen Leitung 2 mittels einer Ausnehmung durch den Mittelsteg 64 zu dem Aluminiumprofil 42 geführt Der negative Pol bzw. der Nulleiter der elektrischen Leitung 2 wird entsprechend an das Aluminiumprofil 43 angeschlossen.

### Bezugszeichenliste

- 2: elektrische Leitung
- 4: Paneel
- 6: Innendichtungsprofil
- 8: Pfosten
- 10: Teilprofil
- 12: Doppel-Isoliersteg
- 14: Metallprofilteil
- 16: Isoliersteg
- 18: Querverbindungssteg
- 20: Halterung
- 22: Isoliereinrichtung
- 24: Abstandhalter
- 28: Ausnehmung
- 30: Halterung
- 32: Isoliereinrichtung
- 38: Kabelklemme
- 40: Isoliersteg
- 42: Aluminiumprofil (positiver Pol)
- 43: Aluminiumprofil (negativer Pol)
- 44: Deckel
- 46: Buchse
- 48: Stecker
- 50: Steckverbindung
- 52: Fassadenhalteelement
- 54: Verschraubung
- 56: Modulsicherung
- 58: Innenwandung
- 60: Querschnittsteile
- 62: Raum
- 64: Mittelsteg

## Patentansprüche

1. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement ein Innendichtungsprofil (6), angeordnet zwischen einem Pfosten (8) oder einem Riegel und dem Fassadenelement (4, 24, 58) ist, wobei die elektrische Leitung (2) im Inneren des Innendichtungsprofils (6) angeordnet ist.

2. Anordnung nach Anspruch 1, bei welcher das Innendichtungsprofil (6) ein zusammengesetztes Profil ist, wobei die elektrische Leitung im Inneren des dem Fassadenelement (4, 24, 58) zugewandten Teilprofils (10) angeordnet ist.

3. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement ein Isolierelement, angeordnet zwischen dem Pfosten (8) oder den Riegel und einem der Fassadenbefestigung dienenden Metallprofilteil (14), ist, wobei das Isolierelement ein Doppel-Isoliersteg (12) ist, der im Bereich der freien Enden der einzelnen Isolierstege (16) wenigstens zwei Querverbindungsstege (18) zum Verbinden der einzelnen Isolierstege (16) aufweist, so daß der Querschnitt des Doppel-lsolierstegs (12) eine Art freie Kammer aufweist, in welcher die elektrische Leitung (2) angeordnet ist.

4. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement ein Isolierelement, angeordnet zwischen dem Pfosten (8) oder dem Riegel und einem der Fassadenbefestigung dienenden Metallprofilteil (14) ist, wobei das Isolierelement oder der einzelne Isoliersteg des Doppel-lsolierstegs (12) eine in deren Längsachsenrichtung verlaufende Halterung (20) aufweist, in welcher die elektrische Leitung (2) angeordnet ist.

5. Anordnung nach Anspruch 4, bei welcher die Halterung (20) in dem Seitenbereich des Isolierelements oder des Isolierstegs (16) angeordnet ist, der dem Fassadenelement (4, 24, 58) zugewandt ist, welches die elektrische Leitung (2) aufweist.

6. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement ein der Befestigung des Fassadenelements (4, 24, 58) dienendes Metallprofil (14) ist, wobei im Querschnittsinneren des Metallprofils (14) eine Ausnehmung (28) vorgesehen ist, die mit einem isolierenden Material ausgekleidet ist, in welcher die elektrische Leitung (2) angeordnet ist.

7. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement ein der Befestigung des Fassadenelements (4,24, 58) dienendes Metallprofil (14) ist, an dessen Querschnitt die elektrische Leitung (2) angeordnet ist, wobei das Metallprofil (14) wenigstens eine in dessen Längsachsenrichtung verlaufende Halterung (30) aufweist, in welcher die elektrische Leitung (2) angeordnet ist.

8. Anordnung nach Anspruch 7, bei welcher die Halterung (30) in dem Seitenbereich des Metallprofils (14) angeordnet ist, der dem Fassadenelement (4, 24, 58) zugewandt ist, welches die elektrische Leitung (2) aufweist.

9. Anordnung nach Anspruch 4, 5, 7 oder 8, bei welcher zwischen der Halterung (20; 30) und der elektrischen Leitung (2) eine zusätzliche Isoliereinrichtung (32) vorgesehen ist, die die elektrische Leitung (2) umgibt, so daß die elektrische Leitung (2) im Inneren der zusätzlichen Isoliereinrichtung (32) angeordnet ist.

10. Anordnung von elektrischen Leitungen (2) im Fassadenbereich von Gebäuden, wobei die elektrischen Leitungen (2) zwischen beliebigen Fassadenelementen und vorhandenen oder zusätzlich anzuordnenden Elementen der Fassadenkonstruktion auf kürzestem Weg und durch diese Elemente in den Boden- oder Deckenbereich eines jeden Stockwerks oder an beliebige Stellen geführt werden, wobei diese Elemente als Führungselemente für die elektrischen Leitungen dienen und ein Übergang der elektrischen Leitungen (2) raumseitig hin erfolgen kann, bei welcher das Führungselement aus wenigstens einer am Querschnitt des Pfostens (8) oder Riegels über Isoliereinrichtungen angeordneten elektrischen sich in Längsachsenrichtung des Pfostens (8) oder Riegels erstreckenden Leitungseinrichtung besteht, welche mit der elektrischen Leitung (2) verbunden ist.

11. Anordnung nach Anspruch 10, bei welcher die elektrische Leitungseinrichtung aus einem Aluminiumprofil (42) besteht.

12. Anordnung nach Anspruch 10 oder 11, bei welcher die elektrische Leitungseinrichtung an einer der Raumseite zugewandten Querschnittsseite des Pfostens (8) oder Riegels angeordnet ist.

13. Anordnung nach einem der Ansprüche 10 bis 12, bei welcher die elektrische Leitungseinrichtung von der Raumseite her gesehen mit wenigstens einer Abdeckung abgedeckt ist.

14. Anordnung nach einem der Ansprüche 6 bis 13, bei welcher die elektrische Leitung eine lösbare Verbindung aufweist.

15. Anordnung nach Anspruch 14, bei welcher die lösbare Verbindung im Falzraum der Fassadenkonstruktion, d. h. zwischen den Fassadenelementen angeordnet ist.

## Claims

1. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element is an inner sealing (6), arranged between an upright (8) or a transom and the facade element (4, 24, 58), the electrical cable (2) being arranged in the interior of the inner sealing profile (6).

2. Arrangement according to Claim 1, in which the inner sealing profile (6) is a composite profile, the electrical cable being arranged in the interior of the part (10) of the profile that faces the facade element (4, 24, 58).

3. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element is an insulating element, arranged between the upright (8) or the transom and a metal profile part (14) serving to secure the facade, the insulating element being a double insulating web (12) which, in the area of the free ends of the individual insulating webs (16) has at least cross-connecting webs (18) for connecting the individual insulating webs (16), so that the cross section of the double insulating web (12) has a type of free chamber, in which the electrical cable (2) is arranged.

4. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element is an insulating element, arranged between the upright (8) or the transom and a metal profile part (14) serving to secure the facade, the insulating element or the individual insulating web of the double insulating web (12) having a holder (20) which extends in its longitudinal axial direction and in which the electrical cable (2) is arranged.

5. Arrangement according to Claim 4, in which the holder (20) is arranged in that side area of the insulating element or of the insulating web (16) which faces the facade element (4, 24, 58) which has the electrical cable (2).

6. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element is a metal profile (14) serving to secure the facade element (4, 24, 58), there being provided in the interior of the cross section of the metal profile (14) a recess (28) which is lined with an insulating material and in which the electrical cable (2) is arranged.

7. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element is a metal profile (14) which serves to secure the facade element (4, 24, 58) and on whose cross section the electrical cable (2) is arranged, the metal profile (14) having at least one holder (30) which extends in its longitudinal axial direction and in which the electrical cable (2) is arranged.

8. Arrangement according to Claim 7, in which the holder (30) is arranged in that side area of the metal profile (14) which faces the facade element (4, 24, 58) which has the electrical cable (2).

9. Arrangement according to Claim 4, 5, 7 or 8, in which, between the holder (20; 30) and the electrical cable (2) an additional insulating device (32) is provided, which surrounds the electrical cable (2), so that the electrical cable (2) is arranged in the interior of the additional insulating device (32).

10. Arrangement of electrical cables (2) in the facade area of buildings, the electrical cables (2) being guided on the shortest path between any desired facade elements and existing or additionally to be arranged elements of the facade construction, and being guided through these elements into the floor or ceiling area of each storey or to optional locations, these elements serving as guide elements for the electrical cables, and it being possible for the electrical cables (2) to pass through to the room side, in which arrangement the guide element comprises at least one electrical conduction device which is arranged on the cross section of the upright (8) or the transom via insulating devices, extends in the longitudinal axial direction of the upright (8) or transom and is connected to the electrical cable (2).

11. Arrangement according to Claim 10, in which the electrical conduction device consists of an aluminium profile (42).

12. Arrangement according to Claim 10 or 11, in which the electrical conduction device is arranged on a cross-sectional side of the upright (8) or transom that faces the room side.

13. Arrangement according to one of Claims 10 to 12, in which the electrical conduction device, as viewed from the room side, is covered with at least one covering.

14. Arrangement according to one of Claims 6 to 13, in which the electrical cable has a detachable connection.

15. Arrangement according to Claim 14, in which the detachable connection is arranged in the rebate of the facade construction, that is to say between the facade elements.

## Revendications

1. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et un passage des conduites électriques (2) peut s'effectuer vers les locaux, agencement où l'élément de guidage est un profilé d'étanchéité intérieure (6) agencé entre un poteau (8) ou une traverse et l'élément de façade (4, 24, 58), la conduite électrique (2) étant agencée à l'intérieur du profilé d'étanchéité intérieure (6).

2. Agencement selon la revendication 1, dans lequel le profilé d'étanchéité intérieure (6) est un profilé composé, la conduite électrique étant agencée à l'intérieur du profilé partiel (10) proche de l'élément de façade (4, 24, 58).

3. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et dans lequel un passage des conduites électriques (2) peut s'effectuer vers les locaux, agencement où l'élément de guidage est un élément d'isolation agencé entre le poteau (8) ou la traverse et une partie de profilé métallique (14) servant à la fixation de la façade, l'élément d'isolation étant une nervure d'isolation double (12) qui comporte dans la zone des extrémités libres des nervures d'isolation individuelles (16) au moins deux nervures de liaisons transversales (18) pour relier les nervures d'isolation individuelles (16) de telle sorte que la section transversale de la nervure d'isolation double (12) comporte une sorte de chambre vide dans laquelle la conduite électrique (2) est agencée.

4. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et dans lequel un passage des conduites électriques (2) peut s'effectuer vers les locaux, agencement où l'élément de guidage est un élément d'isolation agencé entre le poteau (8) ou la traverse et une partie de profilé métallique (14) servant à la fixation de la façade, l'élément d'isolation ou la nervure d'isolation individuelle de la nervure d'isolation double (12) comportant une fixation (20) qui s'étend dans la direction de l'axe longitudinal et dans laquelle la conduite électrique (2) est agencée.

5. Agencement selon la revendication 4, dans lequel la fixation (20) est agencée dans celle des zones latérales de l'élément d'isolation ou de la nervure d'isolation (16) qui est proche de l'élément de façade (4, 24, 58) qui comporte la conduite électrique (2).

6. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et dans lequel un passage des conduites électriques (2) peut s'effectuer vers les locaux, agencement où l'élément de guidage est un profilé métallique (14) qui sert à la fixation de l'élément de façade (4, 24, 58), un évidement (28) étant prévu à l'intérieur de la section transversale du profilé métallique (14), lequel évidement est revêtu d'un matériau isolant dans lequel la conduite électrique (2) est agencée.

7. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et dans lequel un passage des conduites électriques (2) peut s'effectuer vers les locaux, agencement où l'élément de guidage est un profilé métallique (14) qui sert à la fixation de l'élément de façade (4, 24, 58) et sur la section transversale duquel la conduite électrique (2) est agencée, le profilé métallique (14) comportant au moins une fixation (30) qui s'étend dans la direction de son axe longitudinal et dans laquelle la conduite électrique (2) est agencée.

8. Agencement selon la revendication 7, dans lequel la fixation (30) est agencée dans celle des zones latérales du profilé métallique (14) qui est proche de l'élément de façade (4, 24, 58) qui comporte la conduite électrique (2).

9. Agencement selon les revendications 4, 5, 7 ou 8, dans lequel il est prévu entre la fixation (20 ; 30) et la conduite électrique (2) un dispositif d'isolation (32) supplémentaire qui entoure la conduite électrique (2) de telle sorte que la conduite électrique (2) est agencée à l'intérieur du dispositif d'isolation (32) supplémentaire.

10. Agencement de conduites électriques (2) dans la zone de façade de bâtiments, dans lequel les conduites électriques (2) sont guidées au plus court entre des éléments de façade quelconques et des éléments existants ou à rapporter de la structure de façade et par ces éléments dans la zone de sol ou de plafond de chaque étage ou à des emplacements quelconques, dans lequel ces éléments servent d'éléments de guidage pour les conduites électriques et dans lequel un passage des conduites électriques (2) peut s'effectuer vers les locaux, agencement où l'élément de guidage est composé d'au moins un dispositif de guidage électrique qui est agencé sur la section transversale du poteau (8) ou de la traverse par l'intermédiaire de dispositifs d'isolation, qui s'étend dans la direction de l'axe longitudinal du poteau (8) ou de la traverse et qui est relié à la conduite électrique (2).

11. Agencement selon la revendication 10, dans lequel le dispositif de guidage électrique est constitué d'un profilé en aluminium (42).

12. Agencement selon les revendications 10 ou 11, dans lequel le dispositif de guidage électrique est agencé sur un côté de section transversale, proche du côté des locaux, du poteau (8) ou de la traverse.

13. Agencement selon l'une des revendications 10 à 12, dans lequel le dispositif de guidage électrique, vu du côté des locaux, est recouvert d'au moins une couverture.

14. Agencement selon l'une des revendications 6 à 13, dans lequel la conduite électrique comporte une liaison amovible.

15. Agencement selon la revendication 14, dans lequel la liaison amovible est agencée dans l'espace des feuillures de la structure de façade, c'est-à-dire entre les éléments de façade.
